# EUROPÄISCHE PATENTANMELDUNG

(11) **EP 1 475 222 A1**
(43) Veröffentlichungstag der Anmeldung: **10.11.2004**
(21) Anmeldenummer: 03028899.7
(22) Anmeldetag: 17.12.2003
(51) Int. Cl.: B29D 31/508

(54) **Vorrichtung zur Herstellung von Schuhen**

(30) Priorität: 05.05.2003 DE 10320164; 13.06.2003 DE 10326801
(71) Anmelder: KLÖCKNER DESMA SCHUHMASCHINEN GmbH, 28832 Achim (DE)
(72) Erfinder: Pfeiffer, Joachim, 27299 Langwedel (DE); Decker, Christian, 28844 Weyhe (DE); Koliwer, Wolfgang, 28832 Achim (DE)
(74) Vertreter: Röther, Peter, Dipl.-Phys.

(57) **Zusammenfassung**

Die Erfindung betrifft eine Vorrichtung zur Herstellung von Schuhen, bzw. zur Anformung von Sohlen an auf Leisten gezogene Schuhschäfte, von Sohlen oder Schuhformteilen im Spritz-oder Gießverfahren, bestehend aus einem Formwerkzeugoberteil und einem eine offene Kavität aufweisenden Formwerkzeugunterteil, die **dadurch gekennzeichnet** ist, dass das Formwerkzeugoberteil (B) eine in sich geschlossene Ausnehmung (G) aufweist, in die aus Richtung Formwerkzeugunterteil A zum Formvorgang ein die Kavität (F) abschließendes Formteil (C) einsetzbar ist, das infolge einer Relativbewegung (P) zwischen Formwerkzeugoberteil (B) und Formteil (C) auf der gesamten Länge des Ausnehmungsumfangs zur Anlage kommt.

## Beschreibung

Die Erfindung betrifft eine Vorrichtung zur Herstellung von Schuhen bzw. zur Anformung von Sohlen an auf Leisten gezogene Schuhschäfte, von Sohlen oder Schuhformteilen im Spritz-oder Gießverfahren, bestehend aus einem Formwerkzeugoberteil und einem eine offene Kavität aufweisenden Formwerkzeugunterteil.

In der Regel ist das Formwerkzeugunterteil zweigeteilt, wobei diese Seitenformteile nach dem Einsetzen eines mit einem Schaft bezogenen Leistens oder eines Verdrängers (beim Ansohlen mehrschichtiger bzw. mehrfarbiger Sohlen) zusammengefahren werden, so dass sich ein Formhohlraum( Kavität) bildet, in die nun der plastifizierte Kunststoff (PVC, Gummi, PU etc.) aber auch flüssiges PU eingefüllt wird. Infolge der Teilung des Formwerkzeugunterteils tritt dann an der fertigen Sohle eine unerwünschte vertikale Naht auf, die nachgearbeitet werden muss. Darüber hinaus ist bei dieser Art des Formwerkzeugs die Möglichkeit zur Herstellung von Artikeln mit Hinterschnitten stark eingeschränkt.

Der Erfindung liegt daher die Aufgabe zugrunde, eine Vorrichtung der eingangsgenannten Art so auszugestalten, dass die am Artikel sichtbare vertikale Werkzeugtrennung vermieden wird und die Möglichkeit besteht, auch Artikel mit Hinterschnitten herzustellen.

Die Erfindung löst diese Aufgabe gemäß dem kennzeichnenden Teil des Anspruchs 1 dadurch, dass das Werkzeugoberteil eine in sich geschlossene Ausnehmung aufweist, in die aus Richtung Formwerkzeugunterteil zum Formvorgang ein die Kavität abschließendes Formteil einsetzbar ist, das infolge einer Relativbewegung zwischen Formwerkzeugoberteil und Formteil auf der gesamten Länge des Ausnehmungsumfangs zur Anlage kommt.

Dabei kann diese Relativbewegung linear oder schwenkend vor sich gehen.

In einer denkbaren Ausführungsform ist das in Rede stehende Formteil ein Leisten, auf den ein Schuhschaft aufgezogen worden ist. Der Leisten hängt an einer Leistenaufnahme, die mit einem Antrieb zur Ausführung der Relativbewegung versehen ist. Alternativ kann diese Relativbewegung auch durch das Formwerkzeugoberteil ausgeführt werden.

Wesentlich ist, dass das einzusetzende Formteil, an das der im Spritz- oder Gießverfahren erzeugte Formling (entsprechend der Kontur der Kavität) angeformt wird, infolge der Relativbewegung so in die Ausnehmung fährt, dass die Formkavität nach oben hin abgedichtet ist.

Eine weitere Ausführungsform der Erfindung sieht vor, dass das Formwerkzeugunterteil ergänzend ein bewegliches Mittelstück zur Vergrößerung der Kavität aufweisen kann, was für den Füllvorgang benötigt wird, bzw. bei Verwendung zusätzlicher Formteile für mehrschichtige Formlinge (beispielsweise Sohlen) notwendig ist. Dieses bewegliche Mittelstück kann dabei aus der Ebene des Kavitätsbodens nach unten abgesenkt werden,bzw. bildet den Kavitätsboden.

Zur Ausführung der Relativbewegung des Formteils kann beispielsweise ein Pneumatikzylinder, ein Hydraulikzylinder, eine Spindel oder ähnliches verwendet werden.

Darüber hinaus kann der Leisten bzw. das Formteil lösbar an der Aufnahme befestigt sein.

Eine weitere Einsatzmöglichkeit der Vorrichtung betrifft das sogenannte Verfahren "Schuhe nach flexibler Machart" im Direktansohlverfahren. Hierbei wird der Schuhschaft aufgezogen auf den Leisten, ebenfalls in das Formwerkzeugoberteil und anschließend gemeinsam mit diesem auf das Formwerkzeugunterteil bewegt. Der überstehende Rand, der um die Kavität umläuft, wird dabei als Dichtung zwischen dem Formwerkzeugoberteil und dem Formwerkzeugunterteil verpresst.

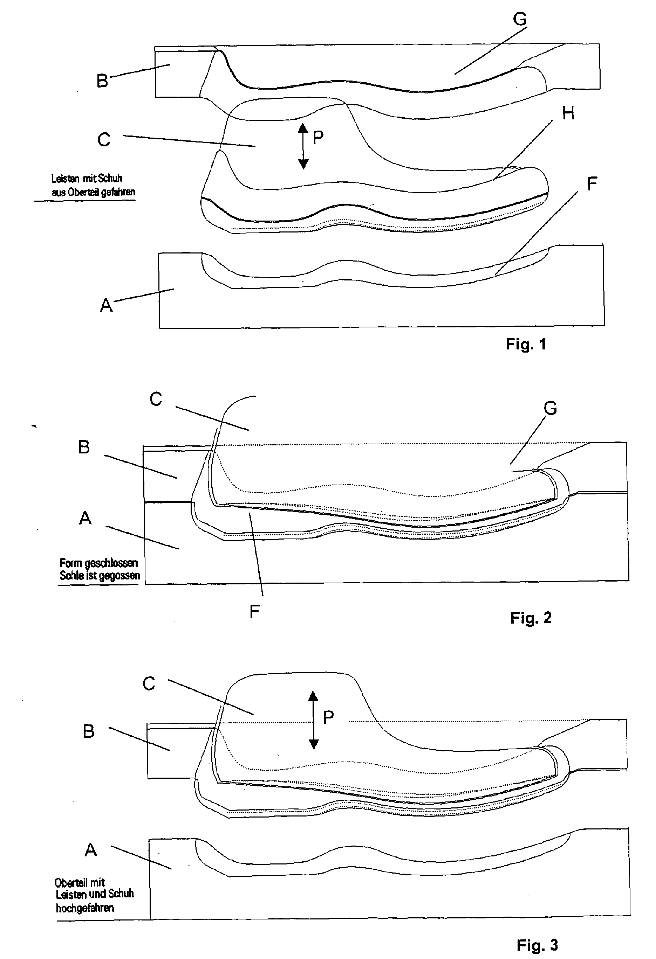

Die Erfindung ergibt sich darüber hinaus aus den lediglich beispielhaft gemeinten Figuren 1 bis 5.

In der Figur 1 ist ein Formwerkzeugunterteil A dargestellt, in das eine Kavität F eingeformt ist (beispielsweise das Profil einer Sohle). Oberhalb der Kavität befindet sich ein Formteil C (beispielsweise ein Leisten mit einem aufgezogenen Schuhschaft). Dieses Formteil C ist an einem nicht dargestellten Aufnahmearm lösbar befestigt und ragt von unten durch eine Ausnehmung G in einem Formwerkzeugoberteil B hindurch. Die Ausnehmung G weist dabei eine Kontur auf, die mit der Kontur der anzuspritzenden Sohlenoberkante H übereinstimmt.

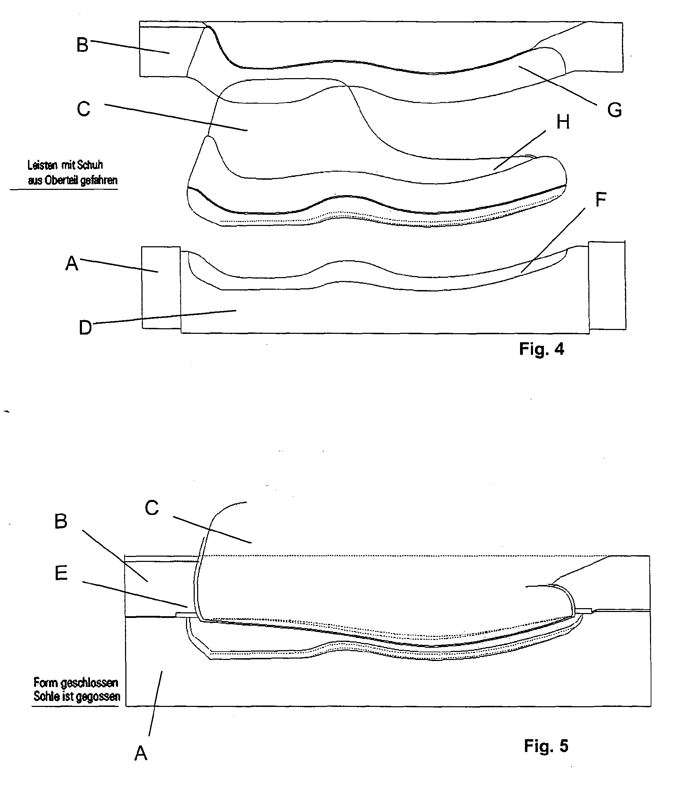

Die Figur 3 zeigt dabei die fertig gespritzte Sohle am Schaft bei geöffnetem Formwerkzeug. Die Figur 4 zeigt die Alternative mit einem beweglichen Mittelstück im Werkzeugunterteil.

Die Figur 5 zeigt die Alternative, bei der ein ganzer Schuhschaft auf den Leisten aufgezogen ist und ein um die Kavität F umlaufender, überstehender Rand E (an der zuvor gespritzten Sohle) als Dichtung zwischen den Teilen A und B verpresst wird und eine zweite Sohlenschicht an die erste angespritzt wird.

Die Figur 2 schließlich stellt den Zustand dar, wenn das Formwerkzeug A und B geschlossen ist, das Formteil C die Ausnehmung G verschließt und die Kavität F geschlossen ist.

## Patentansprüche

1. Vorrichtung zur Herstellung von Schuhen, bzw. zur Anformung von Sohlen an auf Leisten gezogene Schuhschäfte, von Sohlen oder Schuhformteilen im Spritz-oder Gießverfahren, bestehend aus einem Formwerkzeugoberteil und einem eine offene Kavität aufweisenden Formwerkzeugunterteil, **dadurch gekennzeichnet, dass** das Formwerkzeugoberteil (B) eine in sich geschlossene Ausnehmung (G) aufweist, in die aus Richtung Formwerkzeugunterteil A zum Formvorgang ein die Kavität (F) abschließendes Formteil (C) einsetzbar ist, das infolge einer Relativbewegung (P) zwischen Formwerkzeugoberteil (B) und Formteil (C) auf der gesamten Länge des Ausnehmungsumfangs zur Anlage kommt.

2. Vorrichtung nach Anspruch 1, **dadurch gekennzeichnet, dass** im Formwerkzeugunterteil (A) ein bewegliches Mittelstück (D) zur Vergrößerung der Kavität (F) vorgesehen ist.

3. Vorrichtung nach Anspruch 1 oder 2, **dadurch gekennzeichnet, dass** das Formteil (C) über einen Antrieb die Relativbewegung ausführt.

4. Vorrichtung nach Anspruch 1 oder 2, **dadurch gekennzeichnet, dass** das Formwerkzeugoberteil (B) einen Antrieb aufweist, der die Relativbewegung ausführt.

5. Vorrichtung nach einem der Ansprüche 1 bis 4, **dadurch gekennzeichnet, dass** das Formteil (C) lösbar an einem Tragarm befestigbar ist.

6. Vorrichtung nach einem der Ansprüche 1 bis 5, **dadurch gekennzeichnet, dass** das Formteil (C) ein Leisten ist.

7. Vorrichtung nach einem der Ansprüche 1 bis 5, **dadurch gekennzeichnet, dass** das Formteil (C) ein Verdränger ist.
